# EUROPÄISCHE PATENTSCHRIFT

(11) **EP 0 944 772 B1**
(45) Veröffentlichungstag und Bekanntmachung des Hinweises auf die Patenterteilung: **14.11.2001**
(21) Anmeldenummer: 97909361.4
(22) Anmeldetag: 06.10.1997
(51) Int. Cl.: F16B 25/10, F16B 35/04

(54) **SCHRAUBE ZUR GEGENSEITIGEN BEFESTIGUNG VON WENIGSTENS ZWEI BAUTEILEN**
SCREW FOR THE MUTUAL SECURING OF AT LEAST TWO COMPONENTS
VIS DE FIXATION MUTUELLE D'AU MOINS DEUX ELEMENTS CONSTITUTIFS

(30) Priorität: 16.12.1996 DE 19652318
(43) Veröffentlichungstag der Anmeldung: 29.09.1999
(73) Patentinhaber: SFS Industrie Holding AG, 9435 Heerbrugg (CH)
(72) Erfinder: PALM, Erich, CH-9434 Au (CH)
(74) Vertreter: Ludescher, Hans
(86) Internationale Anmeldenummer: EP9705464
(87) Internationale Veröffentlichungsnummer: WO9827345

(56) Entgegenhaltungen:
- DE-U- 29 616 218
- FR-A- 2 491 563

## Beschreibung

Die Erfindung betrifft eine Schraube zur gegenseitigen Befestigung von wenigstens zwei Bauteilen, bestehend aus einem gegebenenfalls an seinem freien Ende mit einem Bohrteil oder einer Eindringspitze versehenen Schaft, der ein über einen Teil seiner Länge geführtes Gewinde aufweist, sowie einem Schraubenkopf, wobei an den Schraubenkopf anschließend ein gewindefreier Schaftabschnitt vorgesehen ist.

Schrauben dieser Art werden unter anderem zur gegenseitigen Befestigung von dünnen Bauteilen, beispielsweise von zwei Blechteilen eingesetzt. Der dem Schraubenkopf zugewandte Endbereich des Gewindes ist praktisch einer quer zur Schraubenachse liegenden Ebene folgend abgeschnitten, so daß die miteinander zu befestigenden Bauteile nach dem endgültigen Setzen einer solchen Schraube im gewindefreien Schaftabschnitt liegen und beidseitig an einem Anschlag anliegen. Der eine Anschlag bildet dabei die Unterseite des Schraubenkopfes und der andere Anschlag das in einer rechtwinklig zur Schraubenachse ausgerichtet abgeschnittene Gewindeende. Ein solcher Befestiger wird in die miteinander zu verbindenden Bauteile eingedreht, bis das Gewinde auf dem Schaft zur Gänze durch beide Bauteile hindurchgeführt ist. Dadurch ist in den Bauteilen kein Gewindeeingriff mehr vorhanden, und die Schraube kann deshalb auch weitergedreht werden, ohne daß es zu einem Überdrehen des Gewindes in einem der beiden Bauteile kommt.

Solche Ausführungen von Schrauben sind bereits bekannt (z.B. US-A-984 969, US-A-2 172 258, US-A-2 321 378, US-A-2 321 379 und US-A-2 353 030). Bei diesen bekannten Ausgestaltungen bedarf es jedoch immer einer exakten Anpassung zwischen der einzusetzenden Schraube und den miteinander zu befestigenden Bauteilen. Die Länge des gewindefreien Schaftabschnittes zwischen der Unterseite des Schraubenkopfes und dem als Anschlag dienenden Ende des Gewindes muß exakt auf die Dicke der beiden Bauteile abgestimmt werden. Da aber aus Toleranzgründen und auch aus Gründen der verschiedenen Einsatzmöglichkeiten solcher Schrauben nicht für jeden Zehntelbereich an Dicke von Bauteilen andere Schrauben eingesetzt werden können, sind solche bekannte Lösungen nur begrenzt einsetzbar.

Die vorliegende Erfindung hat sich zur Aufgabe gestellt, eine Schraube der eingangs genannten Art zu schaffen, welche für in einem bestimmten Bereich unterschiedlich dicke Bauteile eingesetzt werden kann und bei welcher trotzdem ein Überdrehen und eine gegenseitige Anpressung der Bauteile stattfindet.

Erfindungsgemäß gelingt dies dadurch, daß der dem gewindefreien Schaftabschnitt zugewandte Endbereich des Gewindes bei zumindest annähernd gleichbleibender Gewindesteigung spitzwinklig zur Schraubenachse ausläuft, wobei der auslaufende Endbereich des Gewindes bei Rotation der Schraube eine Art kegelstumpfförmige Hüllfläche bildet.

Durch diese erfindungsgemäßen Maßnahmen ist es möglich, daß der Endbereich des Gewindes mehr oder weniger weit in einen oder sogar in beide Bauteile eingreift, wobei das Gewinde in dem eingreifenden Teil überdreht wird und sich dadurch eine Art kegelstumpfförmige Öffnung zumindest in dem zweiten Bauteil bildet. In dieser kegelstumpfförmigen Öffnung, welche sich zumindest im zweiten Bauteil bildet, stützen sich die Gewindegänge des spitzwinklig auslaufenden Endbereiches des Gewindes ab und garantieren so eine optimale gegenseitige Befestigung zwischen den beiden Bauteilen.

Da beim Überdrehvorgang stets die Gewähr gegeben ist, daß sich die gegenseitig zu befestigenden Bauteile aneinander andrücken, ist auch im endgültig gesetzten Zustand der Schraube sichergestellt, daß die gegenseitig zu befestigenden Bauteile eng aneinander anliegend gegenseitig befestigt sind.

Durch den spitzwinklig auslaufenden Endbereich des Gewindes ist es möglich, einen entsprechend großen Bereich von Dicken der beiden miteinander zu befestigenden Bauteile zu überdecken, da es ja an sich gleichgültig ist, wie weit nun dieser spitzwinklig auslaufende Endbereich des Gewindes in den zweiten Bauteil oder sogar in den zweiten und den ersten Bauteil hineingreift.

Beim Überdrehen der Schraube wird das Gegengewinde in den betreffenden Bauteilen zerstört, wobei der spitzwinklig auslaufende Endbereich des Gewindes praktisch eine Art Fräser bildet, welcher bei entsprechender Rotation der Schraube eine Art kegelstumpfförmige Öffnung herstellt. Der spitzwinklig auslaufende Endbereich des Gewindes liegt dabei nach Art eines Keiles bzw. nach Art eines Konusses in der gebildeten kegelstumpfförmigen Öffnung, so daß ein selbsttätiges Rückdrehen der Schraube verunmöglicht wird. Daher ist nicht nur eine gegenseitige feste Verbindung zwischen den zwei Bauteilen möglich, sondern es ist ebenfalls eine entsprechende Schraubensicherung gegeben, so daß ein Drehen und somit auch ein Lösen der Schraube verhindert wird.

Um eine besonders optimale Wirkung zu erzielen, wird vorgesehen, daß der Endbereich des Gewindes in den gewindefreien Schaftabschnitt gegen Null hin ausläuft. Es kann dadurch ein in axialer Richtung des Schraubenschaftes gesehen entsprechend langer Endbereich des Gewindes spitzwinklig auslaufend ausgeführt werden, so daß auch ein relativ großer Bereich von Dicken der zu befestigenden Bauteile mit einem einzigen Befestiger überbrückt werden kann.

Bei einer Ausführungsvariante ist vorgesehen, daß die Hüllfläche des auslaufenden Endbereichs des Gewindes von geraden Erzeugenden gebildet ist. Die Gewindehöhe in dem spitzwinklig auslaufenden Endbereich nimmt also geradlinig ab, zumindest was die Gewindespitzen an einer bestimmten Axialschnittebene der Schraube betrifft. Somit wird eine praktisch exakt kegelstumpfförmige Öffnung in wenigstens dem einen der beiden Bauteile hergestellt.

Im Rahmen der Erfindung ist es aber auch möglich, daß die Hüllfläche des auslaufenden Endbereichs des Gewindes von bogenförmig verlaufenden Erzeugenden gebildet ist. Die im betreffenden Bauteil durch den auslaufenden Endbereich des Gewindes gebildete Öffnung ist dadurch im Querschnitt praktisch bogenförmig verlaufend, so daß eine Art Napfform herausgearbeitet wird, in welcher sich dann der Endbereich des Gewindes nach dem fertigen Setzen abstützt.

Weiter wird vorgeschlagen, daß der Kerndurchmesser des Gewindes im auslaufenden Endbereich des Gewindes in gleichem Maße ansteigt wie der Außendurchmesser des Gewindes kleiner wird. Der Kerndurchmesser geht dadurch praktisch ebenfalls in dem entsprechend spitzen Winkel in den gewindefreien Schaftabschnitt über, wobei der gewindefreie Schaftabschnitt die Zentrierung der Schraube im ersten Bauteil, also in jenem Bauteil, auf welchem der Schraubenkopf zur Anlage kommt, herstellt.

Bei einer Ausführungsvariante der Erfindung wird vorgeschlagen, daß das Gewinde mehrgängig ausgeführt ist. Mit einer solchen Konstruktion wird die Fräswirkung des spitzwinklig auslaufenden Endbereiches des Gewindes noch verbessert, und es sind zusätzliche Abstützbereiche zwischen dem auslaufenden Endbereich und der Oberfläche der gebildeten kegelstumpfartigen Öffnung gegeben.

Bei einer besonderen Ausführungsvariante wird vorgeschlagen, daß unmittelbar an den Schraubenkopf anschließend im gewindefreien Schaftabschnitt ein Bund mit gegenüber dem restlichen gewindefreien Schaftabschnitt größerem Durchmesser anschließt. Damit ist eine noch verbesserte Zentrierung der Schraube im ersten Bauteil und insgesamt eine noch verbesserte gegenseitige Anpressung der miteinander zu verbindenden Bauteile möglich, da von beiden Seiten her ein entsprechender Druck aufgebracht wird. Einerseits muß sich der größere Bund in die gebildete Öffnung im Bauteil eindrücken und andererseits wird die kegelstumpfförmige Öffnung in dem anderen Bauteil gefräst, an welcher sich der spitzwinklig auslaufende Endbereich des Gewindes dann entsprechend abstützen kann.

In diesem Zusammenhang ist es vorteilhaft, wenn der Durchmesser des unmittelbar an den Schraubenkopf anschließenden Bundes größer ist als der Bohrdurchmesser eines am freien Ende des Schaftes ausgebildeten Bohrteiles. Der Bund drückt zumindest die in dem ersten Bauteil gebildeten Gewindeabschnitte teilweise zu, so daß eine entsprechende Passung erzielt wird. Damit ist zusätzlich gewährleistet, daß die miteinander zu befestigenden Bauteile auch quer zur Schraubenachse unverrückbar gehalten sind.

Im Rahmen der Erfindung und insbesondere im Hinblick auf die Bildung einer annähernd kegelstumpfförmigen Öffnung in dem entsprechenden Bauteil ist es vorteilhaft, daß der dem Schraubenkopf abgewandte Bauteil, in welchen der auslaufende Endbereich des Gewindes eingreift, eine Dicke von wenigstens annähernd einer Gewindesteigung aufweist. Dadurch ist gewährleistet, daß sich die kegelstumpfförmige Öffnung, welche sich beim Überdrehen des Befestigers bildet, über den Großteil der Dicke des Bauteiles oder aber über die ganze Dicke des Bauteiles erstreckt. Dann ist auch ein entsprechend langer axialer Anlagebereich geschaffen, um die nötige axiale Halterung der Schraubverbindung sicherzustellen.

Weitere erfindungsgemäße Merkmale und besondere Vorteile werden in der nachstehenden Beschreibung anhand der Zeichnung noch näher erläutert. Es zeigen:
- Fig. 1: eine Schraube im Einsatz zur Verbindung von zwei Bauteilen, wobei die Bauteile aufgeschnitten dargestellt sind;
- Fig. 2: eine gleiche Darstellung wie die Fig. 1, wobei jedoch eine andere konstruktive Ausgestaltung eines Teilbereiches der Schraube vorgesehen ist.

Die erfindungsgemäße Schraube 1 dient zur gegenseitigen Befestigung von wenigstens zwei Bauteilen 2 und 3. In der Zeichnung sind lediglich zwei Bauteile 2 und 3 ersichtlich. Es wäre aber durchaus denkbar, zwischen diese beiden Bauteile 2 und 3 noch einen weiteren Bauteil einzusetzen, so daß dann drei oder gegebenenfalls auch vier Bauteile miteinander verbunden werden.

Die Schraube 1 besteht aus einem Schaft 4 und einem Schraubenkopf 5, wobei auf dem Schaft 4 über einen Teil seiner Länge geführt ein Gewinde 6 vorgesehen ist. Der Schaft 4 kann an seinem freien Ende mit einem Bohrteil oder einer Eindringspitze versehen sein, je nachdem, aus welchem Material die gegenseitig zu befestigenden Bauteile 2 und 3 bestehen. Wenn die Bauteile 2 und 3 aus Metall, insbesondere aus Stahl bestehen, ist auf jeden Fall ein Bohrteil einzusetzen. Sollten die Bauteile oder zumindest ein Teil der Bauteile aus Kunststoff oder aus einem Leichtmetall bestehen, kann das Auslangen mit einer Eindringspitze gefunden werden.

An den Schraubenkopf 5 anschließend ist ein gewindefreier Schaftabschnitt 7 vorgesehen. Der dem gewindefreien Schaftabschnitt 7 zugewandte Endbereich 8 des Gewindes 6 läuft spitzwinklig zur Schraubenachse 9 aus und weist dabei im Endbereich 8 eine zumindest annähernd gleichbleibende Gewindesteigung S auf. Der auslaufende Endbereich 8 des Gewindes 6 bildet bei Rotation der Schraube 1 eine Art kegelstumpfförmige Hüllfläche 10. Wenn nun eine solche Schraube 1 zur Verbindung von zwei Bauteilen 2 und 3 eingesetzt wird, dann werden vorerst entsprechende Löcher entweder mit dem am freien Ende des Schaftes vorgesehenen Bohrteil oder aber durch vorgängiges Bohren hergestellt. Anschließend gelangt das Gewinde 6 des Schaftes 4 mit dem ersten Bauteil 2 und danach mit dem zweiten Bauteil 3 in Eingriff. Sobald der Schraubenkopf 5 auf der Oberfläche 11 des Bauteiles 2 zur Anlage kommt und somit der Vorschub der Schraube in Pfeilrichtung 12 unterbunden wird, dreht die Schraube 1 durch, so daß der spitzwinklig auslaufende Endbereich 8 des Gewindes 4 wie beim gezeigten Beispiel im Bereich des Bauteiles 3 eine Art Fräser bildet, welcher in dem Bauteil 3 eine kegelstumpfförmige Öffnung 13 herstellt. Bei diesem weiteren Drehvorgang der Schraube 1 ist immer dafür gesorgt, daß der Bauteil 3 gegen den Bauteil 2 angepreßt wird, so daß auch eine entsprechend gute gegenseitige Verbindung der beiden Bauteile 2 und 3 zustandekommen kann. Wenn nun nach Beendigung des Setzens der Schraube 1 die kegelstumpfförmige Öffnung 13 gefertigt ist, stützen sich die entsprechenden Bereiche der Gewindespitzen an der Oberfläche der Öffnung 13 ab und halten somit die Bauteile 3 und 2 nach Art einer Keilwirkung bzw. nach Art eines Konusses zusammen. Da der Gewindeverlauf in der Öffnung 13 zerstört wird, können sich nur noch die Gewindespitzen abstützen. Es kann nicht mehr vorkommen, daß sich die Schraube 1 selbsttätig löst, da das Gewinde 6 keinesfalls mehr in das vorher eingeformte Gewinde in dem Bauteil 3 hineinkommen kann. Wenn der Bauteil 3 oder auch der Bauteil 2 entsprechend dicker ausgeführt ist, liegt die kegelstumpfförmige Öffnung 13 entsprechend tiefer in dem Bauteil 3 und kann unter Umständen sogar bis zu dem Bauteil 2 führen. In dem Bauteil 3 muß jedoch immer noch ein entsprechender Bereich der kegelstumpfförmigen Öffnung 13 vorhanden sein, da nur dann eine entsprechende Anpreßkraft bei der gegenseitigen Befestigung der Bauteile 2 und 3 gewährleistet ist. Es kann aber auf jeden Fall in großen Bereichen variiert werden, d.h., daß eine bestimmte Schraubenlänge, also eine Schraube mit einer bestimmten Länge des gewindefreien Schaftabschnittes 7 und einer bestimmten Länge des spitzwinklig auslaufenden Endbereiches 8 des Gewindes 6, für relativ große Bereiche von Dicken der Bauteile 2 und 3 eingesetzt werden kann.

Bei einer solchen konstruktiven Gestaltung stützen sich mehrere Abschnitte des Gewindes 6 an der Innenfläche der kegelstumpfförmigen Öffnung 13 ab, so daß eine entsprechend großflächige und vor allem umfangsgeschlossene Abstützung zwischen der Schraube und den miteinander zu verbindenden Bauteilen geschaffen wird. Eine solche Variante wäre nicht denkbar, wenn einfach das freie Ende eines Gewindes als Abstützstelle für die miteinander zu verbindenden Bauteile herangezogen würde.

Der Endbereich 8 des Gewindes läuft in den gewindefreien Schaftabschnitt 7 gegen Null hin aus, so daß also praktisch eine exakt kegelstumpfförmige Öffnung 13 gefräst werden kann, welche dann unmittelbar auch in den gewindefreien Schaftabschnitt 7 ausläuft.

Die Hüllfläche 10 des auslaufenden Endbereiches 8 des Gewindes 6 kann von geraden Erzeugenden oder aber von bogenförmig verlaufenden Erzeugenden gebildet werden. Bei bogenförmig verlaufenden Erzeugenden ist die Öffnung 13 etwas von einer Kegelstumpfform abweichend ausgeführt, wobei aber auf jeden Fall eine entsprechende Öffnung 13 in den praktisch außen liegenden Bauteil 3 eingearbeitet bzw. eingefräst wird. Bei jeder besonderen Art des auslaufenden Endbereiches 8 des Gewindes können ganz spezielle Formen von Öffnungen 13 geschaffen werden, welche für verschiedene Materialien der Bauteile 2 und 3 eingesetzt werden können. Die Öffnungen 13 können daher von einer Kegelstumpfform bis zu einer Topfform oder einer abgesetzt kegelstumpfförmigen Ausbildung hergestellt werden. Auch bei den geraden Erzeugenden zur Bildung der Hüllfläche 10 ist es möglich, zwei oder mehrere Knickstellen einzufügen, so daß die Öffnung 13 aus zwei oder mehreren aneinander anschließenden kegelstumpfförmigen Abschnitten gebildet wird. Wichtig ist dabei nur, daß durch den auslaufenden Endbereich 8 des Gewindes 6 eine in Achsrichtung der Schraube gesehen sich verjüngende Öffnung 13 geschaffen wird, an welcher der auslaufende Endbereich 8 des Gewindes 6 abgestützt wird.

Im auslaufenden Endbereich 8 des Gewindes 6 steigt der Kerndurchmesser K des Gewindes 6 in gleichem Maße an wie der Außendurchmesser D des Gewindes 6 kleiner wird. Dadurch laufen der Außendurchmesser D und der Kerndurchmesser K am endgültigen Ende des Endbereiches 8 praktisch unmittelbar in den gewindefreien Schaftabschnitt 7 mit dem Durchmesser G über.

Im Rahmen der Erfindung ist es möglich, auf dem Schaft 4 ein mehrgängiges Gewinde auszubilden, wobei dies unter Umständen für ein schnelleres Setzen und für ein exakteres Ausfräsen im Bereich des Endbereiches 8 beiträgt. Außerdem ist dadurch die Gewähr gegeben, daß noch größere Abschnitte des Gewindes 6 an den Begrenzungsflächen der Öffnung 13 abgestützt werden.

Vorteilhaft wird eine solche Schraube 1 dort eingesetzt, wo der dem Schraubenkopf 5 abgewandte Bauteil 3, in welchen der auslaufende Endbereich 8 des Gewindes 6 eingreift, eine Dicke B aufweist, welche wenigstens annähernd einer Gewindesteigung S entspricht. Auf jeden Fall ist es sinnvoll, wenn zumindest der Bauteil 3 so dick ausgestaltet ist, daß er eine entsprechende Festigkeit aufweist und sich bei der gegenseitigen Befestigung in dem die Öffnung 13 umschließenden Bereich nicht ausbiegen kann.

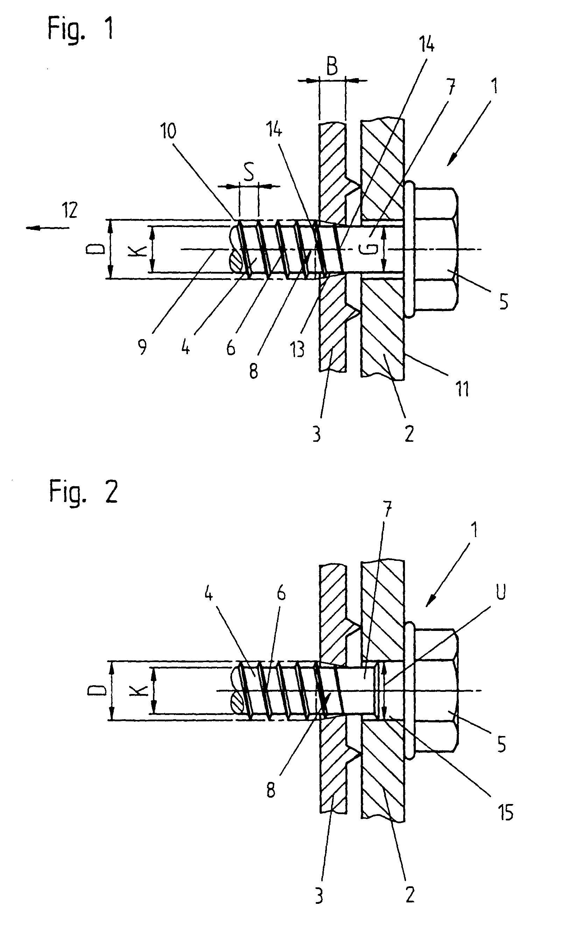

Bei der Ausgestaltung nach Fig. 2 ist noch eine zusätzliche Ausführungsvariante vorgesehen, gemäß welcher im gewindefreien Schaftabschnitt 7 ein Bund 15 mit gegenüber dem restlichen gewindefreien Schaftabschnitt 7 größerem Durchmesser vorgesehen ist. Der Bund 15 schließt unmittelbar an den Schraubenkopf 5 an und bewirkt eine Zentrierung der Schraube in dem Bauteil 2, wobei ein in dem Bauteil 2 gegebenenfalls bereits geformtes Gewinde teilweise wieder zugedrückt wird. Der Durchmesser U des Bundes 15 ist daher zweckmäßig größer ausgeführt als der Bohrdurchmesser eines am freien Ende des Schaftes 4 ausgebildeten Bohrteiles.

Durch die erfindungsgemäße Schraube ist es möglich geworden, zwei Bauteile miteinander zu befestigen, bei welchen kaum mit einem Tiefenanschlag gearbeitet werden kann und bei welchen an sich für eine Erhöhung des Drehmomentes beim Einsatz eines langen Gewindes ein Abschalten möglich ist. Die Schraube 1 kann immer entsprechend überdreht werden, so daß gerade durch die besondere Ausgestaltung des Endbereiches 8 des Gewindes 6 eine Art Halte- oder Abstützöffnung 13 gemäß einer Passung geschaffen wird. Dadurch können sich die Gewindegänge des spitzwinklig auslaufenden Endbereiches 8 an der Wandung der Öffnung 13 abstützen, so daß eine optimale Befestigung in Achsrichtung der Schraube und auch quer zur Achsrichtung der Schraube geschaffen werden kann.

## Patentansprüche

1. Schraube zur gegenseitigen Befestigung von wenigstens zwei Bauteilen, bestehend aus einem gegebenenfalls an seinem freien Ende mit einem Bohrteil oder einer Eindringspitze versehenen Schaft, der ein über einen Teil seiner Länge geführtes Gewinde aufweist, sowie einem Schraubenkopf, wobei an den Schraubenkopf anschließend ein gewindefreier Schaftabschnitt vorgesehen ist, **dadurch gekennzeichnet, daß** der dem gewindefreien Schaftabschnitt (7) zugewandte Endbereich (8) des Gewindes (6) bei zumindest annähernd gleichbleibender Gewindesteigung (S) spitzwinklig zur Schraubenachse (9) ausläuft, wobei der auslaufende Endbereich (8) des Gewindes (6) bei Rotation der Schraube (1) eine Art kegelstumpfförmige Hüllfläche (10) bildet.

2. Schraube nach Anspruch 1, **dadurch gekennzeichnet, daß** der Endbereich (8) des Gewindes (6) in den gewindefreien Schaftabschnitt (7) gegen Null hin ausläuft.

3. Schraube nach Anspruch 1, **dadurch gekennzeichnet, daß** die Hüllfläche (10) des auslaufenden Endbereichs (8) des Gewindes (6) von geraden Erzeugenden gebildet ist.

4. Schraube nach Anspruch 1, **dadurch gekennzeichnet, daß** die Hüllfläche (10) des auslaufenden Endbereichs (8) des Gewindes (6) von bogenförmig verlaufenden Erzeugenden gebildet ist.

5. Schraube nach Anspruch 1, **dadurch gekennzeichnet, daß** der Kerndurchmesser (K) des Gewindes (6) im auslaufenden Endbereich (8) des Gewindes (6) in gleichem Maße ansteigt wie der Außendurchmesser (D) des Gewindes (6) kleiner wird.

6. Schraube nach Anspruch 1 und/oder einem der Ansprüche 2 bis 5, **dadurch gekennzeichnet, daß** das Gewinde mehrgängig ausgeführt ist.

7. Schraube nach einem der Ansprüche 1 bis 6, **dadurch gekennzeichnet, daß** unmittelbar an den Schraubenkopf (5) anschließend im gewindefreien Schaftabschnitt (7) ein Bund (15) mit gegenüber dem restlichen gewindefreien Schaftabschnitt (7) größerem Durchmesser (U) anschließt.

8. Schraube nach Anspruch 7, **dadurch gekennzeichnet, daß** der Durchmesser (U) des unmittelbar an den Schraubenkopf (5) anschließenden Bundes (15) größer ist als der Bohrdurchmesser eines am freien Ende des Schaftes (4) ausgebildeten Bohrteiles.

9. Schraube nach einem der Ansprüche 1 bis 8, **dadurch gekennzeichnet, daß** der dem Schraubenkopf (5) abgewandte Bauteil (3), in welchen der auslaufende Endbereich (8) des Gewindes (6) eingreift, eine Dicke (B) von wenigstens annähernd einer Gewindesteigung (S) aufweist.

## Claims

1. A screw for the mutual fastening of at least two components, comprising a shank optionally provided at its free end with a drilling member or penetrating tip, which shank has a screw-thread extending over part of its length, and also comprising a screw head, wherein a threadless shank portion is provided adjacent the screw head, **characterised in that** the end portion (8) of the screw-thread (6) nearest the threadless shank portion (7) tapers off at an acute angle to the screw axis (9) with at least approximately constant pitch (S), wherein the tapering off end portion (8) of the screw-thread (6) forms, upon rotation of the screw (1), a type of frustoconical enveloping surface (10).

2. A screw according to Claim 1, **characterised in that** the end portion (8) of the screw-thread (6) tapers off to nothing in the threadless shank portion (7).

3. A screw according to Claim 1, **characterised in that** the enveloping surface (10) of the tapering off end portion (8) of the screw-thread (6) is formed by straight generators.

4. A screw according to Claim 1, **characterised in that** the enveloping surface (10) of the tapering off end portion (8) of the screw-thread (6) is formed by arcuately extending generators.

5. A screw according to Claim 1, **characterised in that** the root diameter (K) of the screw-thread (6) increases in the tapering off end portion (8) of the screw-thread (6) to the same extent as the outer diameter (D) of the screw-thread (6) becomes smaller.

6. A screw according to Claim 1 and/or any one of Claims 2 to 6, **characterised in that** the screw-thread (6) is of multistart design.

7. A screw according to any one of Claims 1 to 6, **characterised in that** immediately adjacent the screw head (5) in the threadless shank portion (7) a shoulder (15) of larger diameter (U) than the remaining threadless shank portion (7) adjoins.

8. A screw according to Claim 7, **characterised in that** the diameter (U) of the shoulder (15) immediately adjoining the screw head (5) is larger than the drilling diameter of a drilling member formed at the free end of the shank (4).

9. A screw according to any one of Claims 1 to 8, **characterised in that** the component (3), which is remote from the screw head (5) and in which the tapering off end portion (8) of the screw thread (6) engages, has a thickness (B) of at least approximately one pitch (S).

## Revendications

1. Vis pour fixer entre elles au moins deux pièces, comprenant un corps muni le cas échéant à son extrémité libre, d'une pointe de pénétration ou d'une pièce de perforation, ce corps ayant un filetage sur une partie de sa longueur, ainsi qu'une tête de vis se poursuivant par un segment de corps sans filetage,
**caractérisée en ce que**
la zone d'extrémité (8) du filetage (6) tournée vers le segment de corps sans filetage (7), se poursuit par un pas de filetage (S) au moins sensiblement constant, se terminant à angle aigu par rapport à l'axe (9) de la vis, l'extrémité (8) de sortie du filetage (6) formant une surface enveloppe (10) sensiblement en tronc de cône lors de la rotation de la vis (1).

2. Vis selon la revendication 1,
**caractérisée en ce que**
la fin de la zone d'extrémité (8) du filetage (6) arrive sensiblement à zéro dans le segment de corps sans filetage (7).

3. Vis selon la revendication 1,
**caractérisée en ce que**
la surface enveloppe (10) de la fin de la zone d'extrémité (8) du filetage (6) est formée par des génératrices droites.

4. Vis selon la revendication 1,
**caractérisée en ce que**
la surface enveloppe (10) de la fin de la zone d'extrémité (8) du filetage (6) est formée par des génératrices courbes.

5. Vis selon la revendication 1,
**caractérisée en ce que**
le diamètre primitif (K) du filetage (6) dans la fin de la zone d'extrémité (8) du filetage (6) augmente dans la même mesure que le diamètre extérieur (D) du filetage (6) diminue.

6. Vis selon la revendication 1 et/ou l'une quelconque des revendications 2 à 5,
**caractérisée en ce que**
le filetage est à plusieurs filets.

7. Vis selon l'une des revendications 1 à 6,
**caractérisée en ce que**
de façon directement adjacente à la tête de vis (5), au niveau du segment de corps sans filetage (7), il est prévu une collerette (15) de diamètre (U) plus grand que celui du segment de corps sans filetage (7) restant.

8. Vis selon la revendication 7,
**caractérisée en ce que**
le diamètre (U) de la collerette (15) directement adjacente à la tête de vis (5) est supérieur au diamètre de perçage d'une partie de perçage réalisée à l'extrémité libre du corps (4).

9. Vis selon l'une des revendications 1 à 8,
**caractérisée en ce que**
la pièce (3) opposée à la tête de vis (5) et dans laquelle pénètre la fin de la zone d'extrémité (8) du filetage (6), a une épaisseur (B) sensiblement égale à au moins un pas de filetage (S).
